Europäisches Patentamt

European Patent Office

Office européen des brevets

(19)

(11) Publication number: **0 121 524**
**B1**

(12) **EUROPEAN PATENT SPECIFICATION**

(45) Date of publication of patent specification: **11.01.89**

(51) Int. Cl.⁴: **B 29 C 39/00**

(21) Application number: **83903043.4**

(22) Date of filing: **29.08.83**

(86) International application number:
**PCT/US83/01335**

(87) International publication number:
**WO 84/00921 15.03.84 Gazette 84/07**

(54) Process for producing foam insulation.

(30) Priority: **27.08.82 US 412371**
**03.09.82 US 414953**

(43) Date of publication of application:
**17.10.84 Bulletin 84/42**

(45) Publication of the grant of the patent:
**11.01.89 Bulletin 89/02**

(84) Designated Contracting States:
**CH DE FR GB LI NL**

(56) References cited:
**AU-B- 469 731**
**FR-A-2 212 826**
**US-A-2 806 509**
**US-A-2 921 357**
**US-A-3 957 501**
**US-A-4 272 935**

The file contains technical information
submitted after the application was filed and
not included in this specification

(73) Proprietor: **Air Krete, Inc.**
**P.O. Box 380 East Brutus Street**
**Weedsport, New York 13166 (US)**

(72) Inventor: **THOMSON, Donald W.**
**1215 Lakeview Drive**
**Inverness, FL 32650 (US)**
Inventor: **CHRISTOPHER, R. Keene**
**2705 Von Buren Street**
**Weedsport, NY 13166 (US)**

(74) Representative: **Laurent, Michel et al**
**Cabinet LAURENT et GUERRE B.P. 32**
**F-69131 Ecully Cédex (FR)**

Courier Press, Leamington Spa, England.

## Description

The present invention relates to foams which are useful for insulating cavities and structures, such as spaces between walls in houses.

In the past, it has been known to use an ureaformaldehyde foam for insulating cavities and structures. However, use of this foam has been prohibited because of alleged health hazards to occupants of structures in which this foam has been used.

It has also been known to use a reaction of magnesium oxide with magnesium chloride or magnesium sulfate to produce an oxychloride or oxysulfate cement.

It is an object of this invention to provide an insulating foam wherein the foam maintains sufficient integrity to maintain its shape and volume until the intermixed cement sets or hardens to fix the composition in place.

It is a subsidiary object to provide a foam which is made from materials which are not irritating to occupants of structures in which the foam is used.

The above objcts are obtained by providing a process comprising:

a) mechanically foaming with air an aqueous solution of polyvinyl alcohol and a dispersant, so as to obtain a flow of foam

b) adding to said flow of foam an aqueous solution of barium metaborate.

The foam obtained provides a good insulation "R" value and has properties including flame resistance, low shrinkage, fast set up time, lack of odor and non-toxicity.

A process according to the invention may be carried out with a system (not falling within the scope of the claimed invention) as described in the annexed drawings, wherein:

Fig. 1 is a schematic view of a system for introducing into a remote region a four component cementitious insulating foam that may be used to carry out the process according to the invention;

Fig. 2 is a perspective view of the dispensing gun used in the system illustrated in Fig. 1;

Fig. 3 is a perspective view with portions broken away showing a mixing valve used in the gun of Fig. 2, and

Fig. 4 is an exploded perspective view with portions broken away showing a spray nozzle used in the gun shown in Fig. 1.

The present invention relates to a process for producing a foam material which has utility for insulation. The insulation can be used either in cavities, such as those found between walls, or in open spaces, such as attics. The foam is useful for both new constructions and for existing structures.

For the dispersants of the first component, a sodium salt of a carboxylate polyelectrolyte may advantageously be used. Such polyelectrolytes are sold under the Rohm and Haas trademark "Tamol 731®", and described in Fordyce et al US Patent 2,930,775. In addition to the "Tamol" dispersants, a dispersant known as "Daxad 30"® is useful. Daxad is a Registered Trademark of W. R. Grace & Co.

It has also been discovered that barium metaborate can provide increased hardness and decreased setting time for the foam.

Extenders may also be included in the first component. The extenders may be selected from precipitated calcium carbonate, feldspar, perlite, microspheres, phenolic ballons and zeospheres. Microspheres are micronsized hollow spheres of sodium silicate.

It has been discovered that a 1—5% by weight solution of soap in water can be included with the first component to decrease the water absorption of the final foam. A foam without the soap solution had a water absorption of 15—40% by weight. After the addition of this soap solution, the foam obtained showed a water absorption which was reduced to 1—2% by weight. Ivory brand and Fels Naptha brand soaps have found to be useful.

The compositions according to the invention are formed from only two separate components, as indicated in Example I below:

Example I
First Component (B)
Polyvinyl alcohol (8%)—
about 15.5—21.2%
or about 2.72—11.34 Kg.
Tamol, spray dried—
about 0.3—1.7%
or about 0.05—0.91 Kg.
Water—
about 38.8—33.9%
or about 6.80—18.14 Kg.

Second component (A)
Magnesium oxide—
about 7.7—15.3%
or about 1.36—8.16 Kg.
Busan®—
about 0.6—1.7%
or about 0.09—0.91 Kg.
Water—
about 36.2—25.4%
or about 6.35—13.61 Kg.
Daxad 30—
about 0.6—0.9%
or about 0.11—0.45 Kg.

Air, to from the bubbles or cellular foam, initially with the first Component (B), is an additional component. In this preferred composition it is believed that the mixture of polyvinyl alcohol from the first Component (B) and the Busan® from the second Component (A) quickly react to cause setting of the foam matrix to provide quickly a foam of excellent integrity to support cement until it hardens in place thus contributing its own even more permanent integrity to the insulative foam product. Busan (trademark) is a barium metaborate composition available from Buckman Laboratories. Either 4 mol or 8 mol metaborate may be used. In this preferred composition it is believed that the mixture of polyvinyl alcohol from first component (B), and the Busan from second component (A) quickly react to form a cellular foam, with or without the presence of magnesium oxide. When present, magnesium oxide, contributes long term integrity and fire resistance to the foam.

Although the exact reaction mechanism of the inventive two portion foam insulation system is not yet fully understood, it is believed that the chemistry which occurs during laminar flow mixing contributes to the desirable results of the present invention. As previously indicated, the idea of having a foam system with sufficient integrity to support cement until the cement can cure is carried out in the composition of Example I by the very fast reaction between the polyvinyl alcohol in the First Component (B) which is foamed, and the Busan, barium metaborate, in the cement containing Second Component (A).

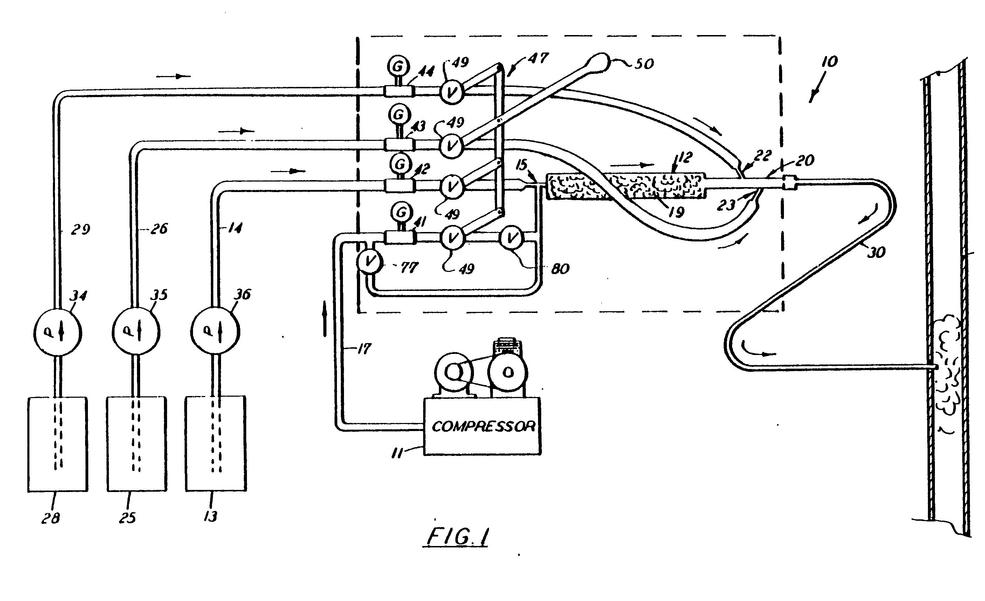

With reference to the drawings and, in particular, to Fig. 1, there is shown a gun system 10 for manufacturing and dispensing a four component insulating foam. One of the components used to generate the foam is compressed air provided by a conventional air compressor 11. The air is combined with a foaming agent (first component) in a foaming chamber 12. The foaming agent is stored in container 13 and delivered by line 14 to a mixing valve 15 located at the entrance to the foaming chamer. As will be explained in greater detail below, compressed air is also delivered to the valve 15 via line 17 wherein the two materials are brought together in metered amounts to create a lather like substance containing a multitude of air bubbles. To assist in the generation of the bubbles, the foaming chamber is packed with a finely divided material 19, such as fine steel wool or glass beads, which creates sufficient turbulence in the flow stream to ensure that the material is well aerated.

The foaming chamber 12 is connected directly in series with a second coating chamber 20 whereupon the flow of foam that is generated in the foaming chamber is caused to flow directly into and through the second chamber. Although not shown, a foam penetratable seal is located at the entrance to the coating chamber which prevents the packing material 19 from passing between chambers.

A pair of inlet ports 22 and 23 are mounted in the side wall of the coating chamber to permit further materials to be added to the foam flow. One of these two coating materials is a cementitious substance used for preparing a fast setting insulation. The cementitious material is stored in the form of an aqueous solution in container 25 and is brought to inlet port 23 via supply line 26. A fast setting material of this type that is suitable for use in the present system is magnesium oxide. The second coating material, which is stored in container 28, is an agent that is capable of reacting with the cementitious material to produce rapid hardening of the foam. The material, upon hardening, also exhibits early strength so that it will become self-supporting almost immediately upon being injected into a cavity. A hose 30 is connected to the outlet to the coating chamber through which the foam is dispensed into a wall cavity 31 or any other suitable region that is to be insulated. The hose and the coating chamber combine to provide a relatively long flow path wherein the coating ingredients combine or mix with the foam under laminar flow conditions to create a well defined homogeneous mixture.

The reacting agent is the first material introduced into the mixing chamber at inlet port 22. The cementitious material is then introduced into the chamber at the second inlet port 23. It is important for the proper manufacture of the present insulation to space the two inlet ports far enough apart to allow sufficient time for the first introduced material to become uniformly distributed in the foam before the second material is added. Although the exact mechanism by which the two coating materials combine is not fully understood, it is known that if they are added simultaneously or too close together, the material will not react in a predictable manner to produce optimum foam. The order in which the two coating materials are added to the mix is immaterial, but it is preferable to add the magnssium oxide component to the foam before the third component. What is important, however, is it is believed that the first introduced material must have sufficient time to substantially coat all of the bubbles in the foam before the second is added. As a result, the cementitious material, upon reacting with the agent, is able to create a hard shell about each bubble to trap and encapsulate the air within the foam blanket. It is believed that by bringing the two coating materials into the system at about the same time causes the bubbles to collapse before encapsulation leading to a failure in the manufacturing process.

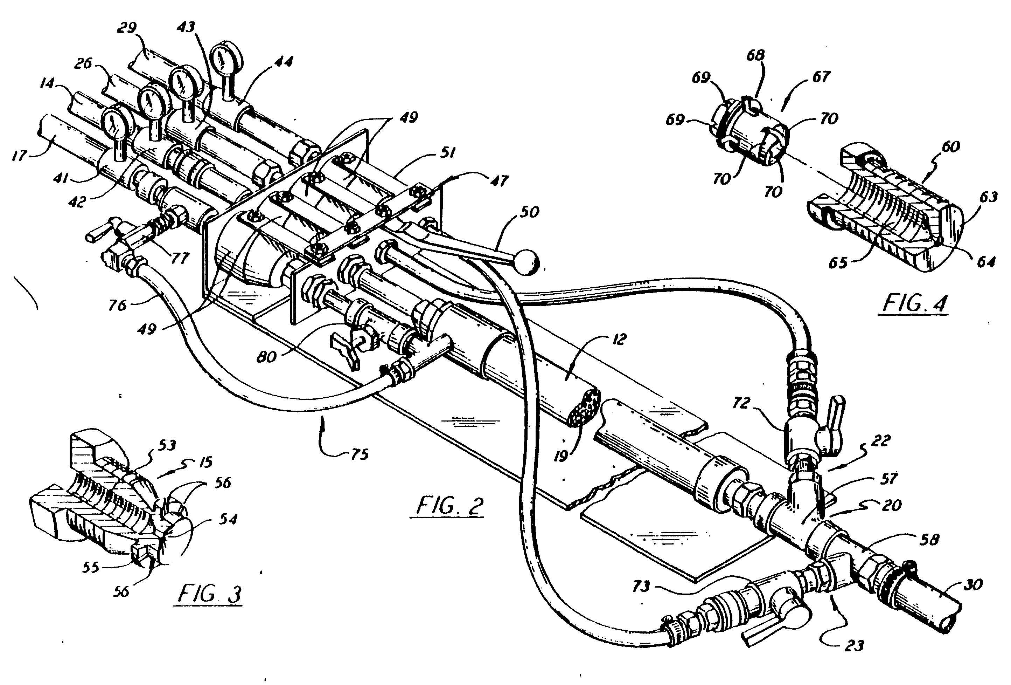

The foaming agent and the two coating materials are each drawn from their respective containers by means of independent pumps 34—36 that are operatively connected into appropriate delivery lines. The materials are pumped at relatively high pressure to the gun section 40 of the system which is illustrated in greater detail in Fig. 2. The high pressure flow in each line, as well as the high pressure flow of air carried by line 17, is stepped down before entering the gun by means of small pressure regulators 41—44. The regulators are individually set so that the pressure of the fluid travelling in each line is brought to an optimum value before the fluid is delivered to the gun. The gun is furnished with a trigger mechanism, generally referenced 47, that enables the operator to quickly actuate or shut down the gun. The trigger includes four on-off valves 49—49 of similar design which are positioned in each supply line downstream from the pressure regulators. Each on-off valve is connected to the trigger 50 through a quick acting lever mechanism 51.

The foaming agent moving through line 14 is passed into the central opening 53 contained in the previously noted mixing valve 15 (Fig. 3). The opening terminates at a metering orifice 54 whereby a metered amount of the foaming agent enters the foaming chamber. Air from line 17 is also brought into the mixing valve directly behind a control ring 55. The ring, in turn, has a series of equally spaced nozzle passages 56—56 formed therein which both turn and shape the air stream entering the foaming chamber. The passages are contoured to impart a volute-like motion to the air stream which enhances bubble generation and provides for thorough mixing at the entrance to the chamber. Bubble generation is further enhanced as the mixture moves through the packing material.

As previously noted, the two coating materials are brought into the flow further downstream in the coating chamber 20. Inlet port 22 is housed within a Y-connector 57 while inlet port 23 is similarly housed within T-connector 58. To insure that each of the two materials thoroughly coat the bubbles, they are sprayed into the foam in the form of a fine mist. A spray nozzle 60, as illustrated in Fig. 4, is used for this purpose. The nozzle is contained in the neck section of the connector and is positioned to direct the mist into the foam without disturbing the laminar nature of the flow. Each spray nozzle 60 includes a body section 62 that is slidably received in the associated connector. The end wall 63 of the body section contains a fine hole 64 that is designed to bring the material passing therethrough into a well defined spray pattern. The inside of the body section is bored out and the bored passage 65 threaded to receive a threaded collar 68 radially disposed on control head 67. The head has a series of entrance slots 69—69 formed therein which meter material into the nozzle. After entering the nozzle, the material is caused to pass through a series of contoured vanes 70—70 that whirls the material as it passes through the hole 64. This, in turn imparts a circular motion to the mist entering the chamber providing for a more uniform and homogeneous coating of the bubbles in the flow stream. The foam material then enters hose 30 and is ultimately dispensed into the insulating region. The materials continue to mix or blend under laminar conditions in the hose, which actually is an extension of the coating chamber. The hose therefore should be long enough to enable the blending process to proceed to near completion. Shut off valves 72 and 73 are provided at the inlet ports which are used by the operator to check the condition of the supply line and the performance of the gun.

An air bypass circuit, generally referenced 75, is mounted upon the gun which allows the operator to reroute air only into the gun for the purpose of cleaning the two chambers and the hose. The bypass loop includes a line 76 and a manually operated bypass valve 77 which takes air from the air line 17 and brings it around the trigger directly into the foaming chamber. A second shutoff valve 80 is positioned in the air line 17 directly at the entrance to the mixing valve which isolates the bypass system from the trigger mechanism. To clean the gun, the shutoff valve 80 is closed and the bypass valve 77 is opened permitting compressed air to bypass the trigger mechanism and thus purge the gun without having to disconnect the material pumps.

Using this foam gun, the first component is foamed through a mixing chamber with air to produce a foam having the consistency of shaving cream. Next, one of the coating materials is introduced into the thus-formed foam cells as the foam is passed to the coating chamber. After this, the other coating material is introduced into the formed-foam structure and the combined ingredients are forced out of the mixing chamber with air pressure through the hose and into an existing cavity for setting and curing.

It is preferred that each component is introduced to the gun through an equal number of orifices. The ratio of the ranges of the orifice sizes for the first, second and third components is about 2—2.5 to about 1—1.5 to about 1—1.5, respectively. Since the flow rate is proportional to the cross-sectional area of the orifices (assuming equal pressure), this results in a ratio of flow rate ranges of about 1—1.56 to about 0.25—0.56 respectively.

## Claims

1. A process for producing thermally insulating foam, comprising:

a) mechanically foaming with air an aqueous solution of polyvinyl alcohol and a dispersant, so as to obtain a flow of foam

b) adding to said flow of foam an aqueous solution of barium metaborate.

2. The process of claim 1, characterised in that an aqueous solution of magnesium oxide is added to said flow of foam.

## Patentansprüche

1. Verfahren zum Herstellen von wärmeisolierendem Schaum, bei dem

a) eine wässrige Lösung an Polyvinylalkohol und ein Dispersionsmittel mittels Luft auf mechanische Weise geschäumt wird, so daß ein Schaumstrom erhalten wird, und

b) dem Schaumstrom eine wässrige Lösung an Bariummetaborat zugesetzt wird.

2. Verfahren nach Anspruch 1, dadurch gekennzeichnet, daß dem Schaumstrom eine wässrige Lösung an Magnesiumoxid zugeführt wird.

## Revendications

1. Procédé pour obtenir une mousse thermoisolante, comprenant les étapes suivantes:

a) on obtient un courant de mousse par moussage mécanique avec de l'air d'une solution aqueuse d'un alcool polyvinylique et d'un agent dispersant;

b) on ajoute audit courant de mousse une solution aqueuse de metaborate de barium.

2. Procédé selon la revendication 1, caractérisé en ce qu'une solution aqueuse d'oxyde de magnesium est ajoutée audit courant de mousse.

FIG. 1

EP 0 121 524 B1

FIG. 2

FIG. 3

FIG. 4

EP 0 121 524 B1